# EUROPEAN PATENT APPLICATION

(11) **EP 4 645 781 A1**
(43) Date of publication of application: **05.11.2025**
(21) Application number: 22969899.8
(22) Date of filing: 30.12.2022
(51) Int. Cl.: H04L 27/00

(54) **GLOBAL NAVIGATION SATELLITE SYSTEM (GNSS) POSITIONING MEASUREMENT METHODS AND APPARATUSES**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/144374
(87) International publication number: WO 2024/138759

(57) **Abstract**

Disclosed in the embodiments of the present application are global navigation satellite system (GNSS) positioning measurement methods and apparatuses. A method comprises: receiving configuration information sent by a network device, the configuration information being used for instructing a terminal device to perform periodic and/or non-periodic positioning measurement; and according to the configuration information, performing positioning measurement. Accordingly, the terminal device can reasonably perform GNSS measurement according to the configuration information, and thus can timely and effectively acquire GNSS measurement-based position information, so as to further acquire more accurate uplink synchronization compensation information, thus avoiding uplink transmission interferences between different terminal devices.

## Description

### TECHNICAL FIELD

The disclosure relates to the field of communication technology, and in particular to a method and an apparatus for global navigation satellite system (GNSS) positioning measurement.

### BACKGROUND

In satellite communication scenarios, due to an extended signal transmission distance, a data transmission time is prolonged. For a transmission with an uplink-downlink relationship, a parameter compensating for a transmission delay is introduced. A terminal is required to acquire its location information to facilitate uplink synchronization compensation.

In the related art, the terminal may enter an idle state when acquiring global navigation satellite system (GNSS) information. When supporting a service with a long transmission time, the GNSS information may expire, and the terminal is required to re-acquire the GNSS information. While a network device may trigger the terminal to perform a GNSS measurement via a command to re-acquire the GNSS information, the terminal may fail to receive such triggering indication, resulting in untimely acquiring of the GNSS information.

### SUMMARY

An embodiment of a first aspect of the disclosure provides a method for global navigation satellite system (GNSS) positioning measurement, performed by a terminal. The method includes: receiving configuration information sent by a network device, in which the configuration information is configured to instruct the terminal to perform a periodic positioning measurement and/or a non-periodic positioning measurement; and performing a positioning measurement based on the configuration information.

An embodiment of a second aspect of the disclosure provides a method for GNSS positioning measurement, performed by a network device. The method includes: sending configuration information to a terminal, in which the configuration information is configured to instruct the terminal to perform a periodic positioning measurement and/or a non-periodic positioning measurement.

An embodiment of a third aspect of the disclosure provides an apparatus for GNSS positioning measurement. The apparatus includes: a transceiver unit, configured to receive configuration information sent by a network device, in which the configuration information is configured to instruct the apparatus to perform a periodic positioning measurement and/or a non-periodic positioning measurement; and a processing unit, configured to perform a positioning measurement based on the configuration information.

An embodiment of a fourth aspect of the disclosure provides an apparatus for GNSS positioning measurement. The apparatus includes: a transceiver unit, configured to send configuration information to a terminal, in which the configuration information is configured to instruct the terminal to perform a periodic positioning measurement and/or a non-periodic positioning measurement.

An embodiment of a fifth aspect of the disclosure provides a communication device. The communication device includes a processor and a memory, in which the memory stores a computer program, which, when executed by the processor, causes the device to implement the method of the embodiment of the first aspect.

An embodiment of a sixth aspect of the disclosure provides a communication device. The communication device includes a processor and a memory, in which the memory stores a computer program, which, when executed by the processor, causes the device to implement the method of the embodiment of the second aspect.

An embodiment of a seventh aspect of the disclosure provides a communication device. The communication device includes a processor and an interface circuit; in which the interface circuit is configured to receive code instructions and transmit the code instructions to the processor; and the processor is configured to execute the code instructions to implement the method of the embodiment of the first aspect.

An embodiment of an eighth aspect of the disclosure provides a communication device. The communication device includes a processor and an interface circuit; in which the interface circuit is configured to receive code instructions and transmit the code instructions to the processor; and the processor is configured to execute the code instructions to implement the method of the embodiment of the second aspect.

An embodiment of a ninth aspect of the disclosure provides a computer-readable storage medium. The computer-readable storage medium is configured to store instructions, in which, when the instructions are executed, the method of the embodiment of the first aspect is implemented.

An embodiment of a tenth aspect of the disclosure provides a computer-readable storage medium. The computer-readable storage medium is configured to store instructions, in which, when the instructions are executed, the method of the embodiment of the second aspect is implemented.

An embodiment of an eleventh aspect of the disclosure provides a computer program that, when running on a computer, causes the computer to perform the method of the embodiment of the first aspect.

An embodiment of a twelfth aspect of the disclosure provides a computer program that, when running on a computer, causes the computer to perform the method of the embodiment of the second aspect.

Embodiments of the disclosure provide the method and the apparatus for GNSS positioning measurement. The configuration information sent by the network device is received, in which the configuration information is configured to instruct the terminal to perform the periodic positioning measurement and/or the non-periodic positioning measurement. The positioning measurement is performed based on the configuration information. This enables the terminal to properly perform the GNSS measurement based on the configuration information, thus timely and effectively acquiring location information based on the GNSS measurement. Further, uplink synchronization compensation information may be acquired more accurately, thus avoiding interference between uplink transmissions from different terminals.

Additional aspects and advantages of the disclosure will be set forth in part in the description which follows, and in part will be obvious from the description, or will be learned by practice of the present invention.

### BRIEF DESCRIPTION OF THE DRAWINGS

In order to explain technical solutions in the embodiments of the disclosure or the related art more clearly, the figures described in the embodiments of the disclosure or required in the related art will be briefly introduced below.
FIG. 1a is a diagram illustrating an architecture of a communication system according to an embodiment of the disclosure.
FIG. 1b is a schematic diagram illustrating an uplink-downlink timing-aligned transmission manner on a network device side.
FIG. 1c is a schematic diagram illustrating an uplink-downlink timing-misaligned transmission manner on a network device side.
FIG. 2 is a flow chart illustrating a method for global navigation satellite system (GNSS) positioning measurement provided in embodiments of the disclosure.
FIG. 3 is a flow chart illustrating a method for GNSS positioning measurement provided in embodiments of the disclosure.
FIG. 4 is a schematic diagram a method for GNSS positioning measurement provided in embodiments of the disclosure.
FIG. 5 is a flow chart illustrating a method for GNSS positioning measurement provided in embodiments of the disclosure.
FIG. 6 is a flow chart illustrating a method for GNSS positioning measurement provided in embodiments of the disclosure.
FIG. 7 is a flow chart illustrating a method for GNSS positioning measurement provided in embodiments of the disclosure.
FIG. 8 is a flow chart illustrating a method for GNSS positioning measurement provided in embodiments of the disclosure.
FIG. 9 is a flow chart illustrating a method for GNSS positioning measurement provided in embodiments of the disclosure.
FIG. 10 is a block diagram illustrating an apparatus for GNSS positioning measurement provided in embodiments of the disclosure.
FIG. 11 is a block diagram illustrating an apparatus for GNSS positioning measurement provided in embodiments of the disclosure.
FIG. 12 is a block diagram illustrating an apparatus for GNSS positioning measurement provided in embodiments of the disclosure.
FIG. 13 is a block diagram illustrating a chip provided in embodiments of the disclosure.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements, unless otherwise indicated. The implementations described in the following exemplary embodiments do not represent all implementations consistent with the embodiments of the disclosure. Rather, they are merely examples of devices and methods consistent with some aspects of the embodiments of the disclosure as recited in the appended claims.

Terms used in the embodiments of the disclosure are for the purpose of describing specific embodiments only, and are not intended to limit the embodiments of the disclosure. As used in the embodiments of the disclosure and the appended claims, the singular forms "a/an", and "the" are also intended to include the plural forms, unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used herein may be interpreted as "when" or "upon" or "in response to determining...".

Embodiments of the disclosure are described in detail below, and examples of the embodiments are illustrated in the accompanying figures, in which the same or similar symbols from beginning to end indicate the same or similar elements. The embodiments described below by reference to the accompanying figures are exemplary and are intended to be used to explain the disclosure and are not to be construed as a limitation of the disclosure.

In order to better understand a method for global navigation satellite system (GNSS) positioning measurement in embodiments of the disclosure, a communication system to which embodiments of the disclosure are applicable is described below.

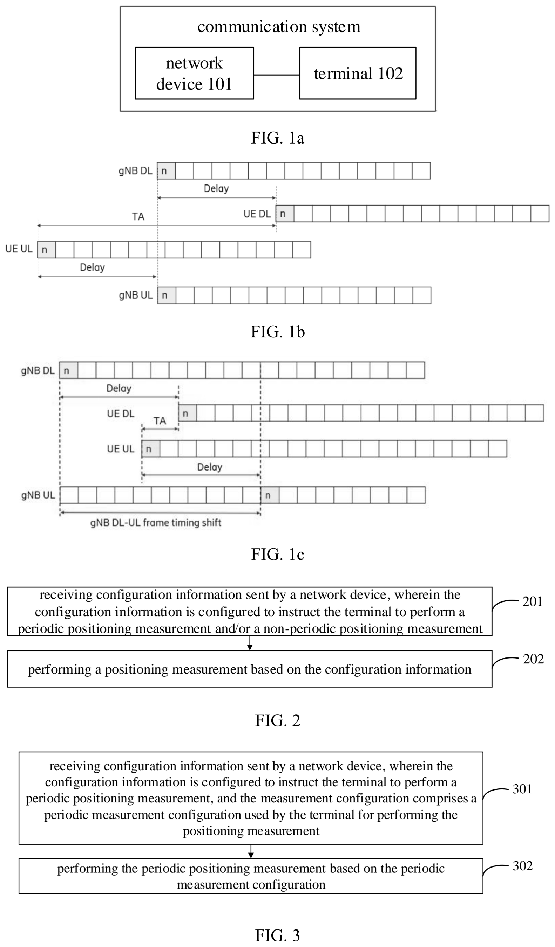

Referring to FIG. 1a, FIG. 1a is a diagram illustrating an architecture of a communication system according to an embodiment of the disclosure. The communication system may include, but is not limited to, one network device and one terminal. A number and a form of the devices shown in FIG. 1a are only for example and do not constitute a limitation to embodiments of the disclosure, and the system may include two or more network devices and two or more terminals in practical applications. The communication system as illustrated in FIG. 1a may include one network device 101 and one terminal 102 for example.

It should to be noted that the technical solution in embodiments of the disclosure may be applicable for various communication systems, for example, a long term evolution (LTE) system, a 5th generation (5G) mobile communication system, a 5G new radio (NR) system or other future new mobile communication systems.

The network device 101 in embodiments of the disclosure is an entity for transmitting or receiving a signal at a network side. For example, the network device 101 may be an evolved NodeB (eNB), a transmission reception point (TRP), a next generation NodeB (gNB) in a NR system, a base station in other future mobile communication systems, or an access node in a wireless fidelity (Wi-Fi) system. A specific technology and a specific device form used by the network device are not limited in embodiments of the disclosure. The network device according to embodiments of the disclosure may consist of a central unit (CU) and a distributed unit (DU). The CU may also be referred to as a control unit. A protocol layer of a network device such as a base station may be split by using a CU-DU structure, so that functions for a part of the protocol layer are placed in the CU for centralized control, and functions of a remaining part or all of the protocol layers are distributed in the DU, and the DU is centrally controlled by the CU.

The terminal 102 in embodiments of the disclosure is an entity for receiving or transmitting a signal at a user side, for example, a mobile phone. The terminal may be referred to as a terminal, a user equipment (UE), a mobile station (MS), a mobile terminal (MT), etc. The terminal may be an automobile with a communication function, a smart automobile, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology used by the terminal and a specific device form of the terminal are not limited in embodiments of the disclosure.

With continuous development of wireless communication technologies, satellite communication is recognized as a crucial aspect in evolution of future wireless communication systems. In satellite communication scenarios, a long signal transmission distance between a transmitter and a receiver results in significant data transmission delay. For a transmission with an uplink-downlink relationship, current standardization discussions have established introduction of a parameter including an offset value Koffset to compensate for the transmission delay. As shown in FIG. 1b and FIG. 1c, FIG. 1b is a schematic diagram illustrating an uplink-downlink timing-aligned transmission manner on a network device side, FIG. 1c is a schematic diagram illustrating an uplink-downlink timing-misaligned transmission manner on a network device side.

A terminal may compensate for the transmission delay using ephemeris information and information related to common timing advance (TA). The ephemeris information and the information related to common TA are notified to the terminal through system information.

In satellite communication scenarios, due to an extended signal transmission distance, a data transmission time is prolonged. For a transmission with an uplink-downlink relationship, a parameter compensating for a transmission delay is introduced. A terminal is required to acquire its location information to facilitate uplink synchronization compensation.

In the related art, the terminal may enter an idle state when acquiring global navigation satellite system (GNSS) information. When supporting a service with a long transmission time, the GNSS information may expire, and the terminal is required to re-acquire the GNSS information. While a network device may trigger the terminal to perform a GNSS measurement via a command to re-acquire the GNSS information, the terminal may fail to receive such triggering indication, resulting in untimely acquiring of the GNSS information.

It may be understood that a communication system described in embodiments of the disclosure is intended to explain technical solutions of embodiments of the disclosure more clearly, and does not constitute a limitation to the technical solutions provided by embodiments of the disclosure. Those skilled in the art know that, with evolution of a system architecture and emergence of a new business scenario, the technical solutions provided in embodiments of the disclosure are equally applied to similar technical problems.

A method and an apparatus for GNSS positioning measurement in the disclosure are further described in combination with the accompanying drawings.

Please to referring to FIG. 2, FIG. 2 is a flow chart illustrating a method for GNSS positioning measurement according to an embodiment of the disclosure. It should be noted that the method for GNSS positioning measurement in embodiments of the disclosure is performed by a terminal. The method may be performed independently or may be performed in conjunction with any other embodiments of the disclosure. As shown in FIG. 2, the method may include the following steps.

At step 201, configuration information sent by a network device is received, in which the configuration information is configured to instruct the terminal to perform a periodic positioning measurement and/or a non-periodic positioning measurement.

In an embodiment of the disclosure, the terminal can receive the configuration information sent by the network device. The configuration information is configured to instruct the terminal to perform the periodic positioning measurement and/or the non-periodic positioning measurement.

In some implementations, the configuration information is configured to instruct the terminal to perform the periodic positioning measurement. The configuration information may include a periodic measurement configuration used by the terminal for performing the periodic positioning measurement. The measurement configuration may include periodic information of the terminal to perform the positioning measurement and first information. The first information is configured to determine a time domain range in which the terminal performs the positioning measurement. The terminal may perform the periodic positioning measurement based on the periodic measurement configuration. That is, the terminal may perform the positioning measurement within the time domain range determined based on the first information according to the periodic information included in the measurement configuration.

In an embodiment, the first information may indicate the time domain range using various manners. For example, the first information may directly indicates a start position and an end position of the time domain range, or indicate a start position and a length of the time domain range, or indicate an end position and a length of the time domain range, which is not limited in embodiments of the disclosure.

In an embodiment, the configuration information may further include at least one periodic measurement configuration. The terminal may receive first indication information sent by the network device. The first indication information is configured to indicate, from the at least one measurement configuration, a measurement configuration used by the terminal for performing the positioning measurement.

In an embodiment, in a case where the configuration information includes the at least one periodic measurement configuration, when the terminal performs the positioning measurement using a first measurement configuration, the terminal may further receive a triggering indication sent by the network device. The triggering indication is configured to instruct the terminal to change periodic measurement configuration information. After receiving the triggering indication, the terminal may perform the positioning measurement based on a second measurement configuration instructed by the triggering indication.

In an embodiment, after receiving the configuration information and performing the periodic positioning measurement, the terminal may further receive updated configuration information sent by the network device. The updated configuration information is configured to instruct the terminal to perform the non-periodic positioning measurement. After receiving the updated configuration information, the terminal may stop performing the periodic positioning measurement and wait to receive second indication information sent by the network device to perform the non-periodic positioning measurement.

In some implementations, the configuration information is configured to instruct the terminal to perform the non-periodic positioning measurement. The terminal may receive the second indication information sent by the network device. The second indication information is configured to instruct the terminal to perform the positioning measurement. That is, the terminal performs the positioning measurement triggered by the second indication information sent by the network device.

In an embodiment, the second indication information is further configured to indicate the time domain range in which the terminal performs the positioning measurement.

In an embodiment, the configuration information is further configured to determine the time domain range in which the terminal performs the positioning measurement.

In an embodiment, the second indication information or the configuration information may indicate the time domain range using various manners. For example, the second indication information or the configuration information may directly indicate a start position and an end position of the time domain range, or indicate a start position and a length of the time domain range, or indicate an end position and a length of the time domain range, which is not limited in embodiments of the disclosure.

In an embodiment, after receiving the configuration information and performing the non-periodic positioning measurement, the terminal may further receive updated configuration information sent by the network device. The updated configuration information is configured to instruct the terminal to perform the periodic positioning measurement. After receiving the updated configuration information, the terminal may stop performing the non-periodic positioning measurement and perform the periodic positioning measurement based on the updated configuration information.

In some implementations, the configuration information is configured to instruct the terminal to perform the periodic positioning measurement and the non-periodic positioning measurement. The terminal may start to perform the periodic positioning measurement and the non-periodic positioning measurement based on the configuration information. After receiving third indication information sent by the network device, the terminal stops performing the periodic positioning measurement, or stops performing the non-periodic positioning measurement, or stops performing both the periodic positioning measurement and the non-periodic positioning measurement.

At step 202, a positioning measurement is performed based on the configuration information.

In an embodiment of the disclosure, the terminal may perform the periodic positioning measurement or the non-periodic positioning measurement based on the received configuration information.

In embodiments of the disclosure, the positioning measurement may be a GNSS measurement.

In summary, the configuration information sent by the network device is received, in which the configuration information is configured to instruct the terminal to perform the periodic positioning measurement and/or the non-periodic positioning measurement. The positioning measurement is performed based on the configuration information. This enables the terminal to properly perform the GNSS measurement based on the configuration information, thus timely and effectively acquiring location information based on the GNSS measurement. Further, uplink synchronization compensation information may be acquired more accurately, thus avoiding interference between uplink transmissions from different terminals.

FIG. 3 is a flow chart illustrating a method for GNSS positioning measurement according to an embodiment of the disclosure. It should be noted that the method for GNSS positioning measurement in embodiments of the disclosure is performed by a terminal. The method may be performed independently or may be performed in conjunction with any other embodiments of the disclosure. As shown in FIG. 3, the method may include the following steps.

At step 301, configuration information sent by a network device is received, in which the configuration information is configured to instruct the terminal to perform a periodic positioning measurement, and the measurement configuration includes a periodic measurement configuration used by the terminal for performing the positioning measurement.

In an embodiment of the disclosure, the terminal may receive the configuration information sent by the network device. The configuration information is configured to instruct the terminal to perform the periodic positioning measurement.

The configuration information may include the periodic measurement configuration used by the terminal for performing the periodic positioning measurement. The measurement configuration may include periodic information of the terminal to perform the positioning measurement and first information. The first information is configured to determine a time domain range in which the terminal performs the positioning measurement. The terminal may perform the periodic positioning measurement based on the periodic measurement configuration, that is, perform the positioning measurement within the time domain range determined based on the first information, according to the periodic information included in the measurement configuration.

In an embodiment, the first information may indicate the time domain range using various manner. For example, the first information may directly indicate a start position and an end position of the time domain range, or indicate a start position and a length of the time domain range, or indicate an end position and a length of the time domain range, which is not limited in embodiments of the disclosure.

In an embodiment, the configuration information may further include at least one periodic measurement configuration. The terminal may receive first indication information sent by the network device. The first indication information is configured to indicate, from the at least one measurement configuration, a measurement configuration used by the terminal for performing the positioning measurement.

As an example, as shown in the following Table, the configuration information may include a periodic measurement configuration 1, a periodic measurement configuration 2, a periodic measurement configuration 3, and a periodic measurement configuration 4. The first indication information may be one of "00", "01", "10", or "11". For example, the first indication information "00" is configured to instruct the terminal to perform the positioning measurement using the periodic measurement configuration 1, the first indication information "01" is configured to instruct the terminal to perform the positioning measurement using the periodic measurement configuration 2, and so on.

| indication information | configuration information |
|---|---|
| 00 | periodic measurement configuration 1 |
| 01 | periodic measurement configuration 2 |
| 10 | periodic measurement configuration 3 |
| 11 | periodic measurement configuration 4 |

In an embodiment, the first indication information may be carried in downlink control information (DCI). For example, the first indication information may be carried in a predefined or configurable information field in the DCI.

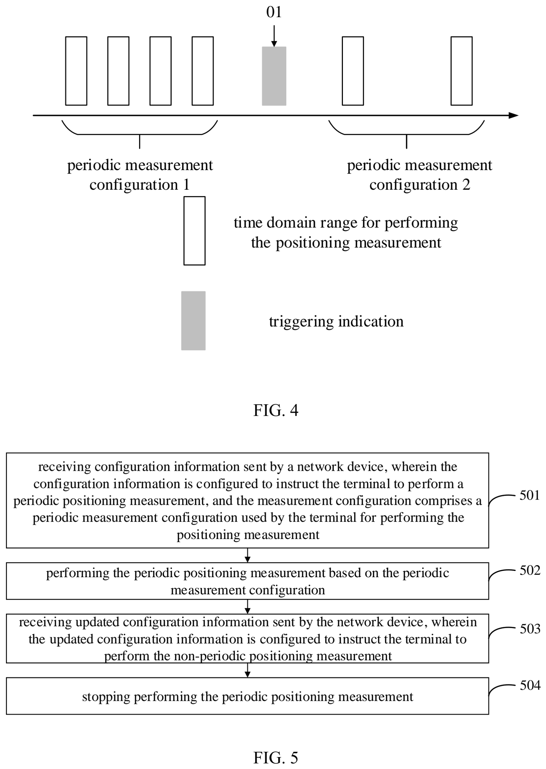

In an embodiment, in a case where the configuration information includes at least one periodic measurement configuration, when the terminal performs the positioning measurement using a first measurement configuration, the terminal may further receive a triggering indication sent by the network device. The triggering indication is configured to instruct the terminal to change periodic measurement configuration information. After receiving the triggering indication, the terminal may perform the positioning measurement based on a second measurement configuration instructed by the triggering indication. As an example, as shown in FIG. 4, the terminal may perform the periodic positioning measurement based on the periodic measurement configuration 1. After receiving the triggering indication, the terminal may perform the periodic positioning measurement based on the periodic measurement configuration 2 indicated by the triggering indication.

In some implementations, after receiving the configuration information and performing the periodic positioning measurement, the terminal may further receive updated configuration information sent by the network device. The updated configuration information is configured to instruct the terminal to perform the non-periodic positioning measurement. After receiving the updated configuration information, the terminal may stop performing the periodic positioning measurement and perform the non-periodic positioning measurement or support performing both the periodic positioning measurement and the non-periodic positioning measurement.

In some implementations, the terminal may perform the non-periodic positioning measurement based on a protocol agreement before receiving the configuration information. After receiving the configuration information, the terminal performs the periodic positioning measurement based on an indication of the configuration information.

At step 302, the periodic positioning measurement is performed based on the periodic measurement configuration.

The measurement configuration may include periodic information of the terminal to perform the positioning measurement and first information. The first information is configured to determine a time domain range in which the terminal performs the positioning measurement. The terminal may perform the periodic positioning measurement based on the periodic measurement configuration, that is, perform the positioning measurement within the time domain range determined based on the first information, according to the periodic information included in the measurement configuration.

In an embodiment of the disclosure, the terminal device may perform, according to the periodic measurement configuration, the periodic positioning measurement within the time domain range determined based on the first information included in the measurement configuration, on the basic of the periodic information included in the measurement configuration.

In summary, the configuration information sent by the network device is received, in which the configuration information is configured to instruct the terminal to perform the periodic positioning measurement, and the measurement configuration includes the periodic measurement configuration used by the terminal for performing the positioning measurement. The periodic positioning measurement is performed based on the periodic measurement configuration. This enables the terminal to properly perform the GNSS measurement based on the configuration information, thus timely and effectively acquiring location information based on the GNSS measurement. Further, uplink synchronization compensation information may be acquired more accurately, thus avoiding interference between uplink transmissions from different terminals.

FIG. 5 is a flow chart illustrating a method for GNSS positioning measurement according to an embodiment of the disclosure. It should be noted that the method for GNSS positioning measurement in embodiments of the disclosure is performed by a terminal. The method may be performed independently or may be performed in conjunction with any other embodiments of the disclosure. As shown in FIG. 5, the method may include the following steps.

At step 501, configuration information sent by a network device is received, in which the configuration information is configured to instruct the terminal to perform a periodic positioning measurement, and the measurement configuration includes a periodic measurement configuration used by the terminal for performing the positioning measurement.

At step 502, the periodic positioning measurement is performed based on the periodic measurement configuration.

In an embodiment of the disclosure, step 501 and step 502 may be realized in any manner of the embodiments of the disclosure, which is not limited in embodiments of the disclosure and will not be further detailed herein.

At step 503, updated configuration information sent by the network device is received, in which the updated configuration information is configured to instruct the terminal to perform the non-periodic positioning measurement.

In an embodiment of the disclosure, the terminal device may receive the updated configuration information sent by the network device. The updated configuration information is configured to instruct the terminal to perform the non-periodic positioning measurement.

That is, in an embodiment of the disclosure, the terminal device may receive the updated configuration information sent by the network device to switch a mode (periodic or non-periodic) for performing the positioning measurement.

At step 504, performing the periodic positioning measurement is stopped.

In an embodiment of the disclosure, when performing the periodic positioning measurement, the terminal may receive the updated configuration information sent by the network device, which is configured to instruct performing the non-periodic positioning measurement. The terminal may stop the periodic positioning measurement based on the updated configuration information. The terminal may perform the non-periodic positioning measurement or support performing both the periodic positioning measurement and the non-periodic positioning measurement based on the updated configuration information.

In summary, the configuration information sent by the network device is received, in which the configuration information is configured to instruct the terminal to perform the periodic positioning measurement, and the measurement configuration includes the periodic measurement configuration used by the terminal for performing the positioning measurement. The periodic positioning measurement is performed based on the periodic measurement configuration. The second configuration information sent by the network device is received, in which the second configuration information is configured to instruct the terminal to perform the non-periodic positioning measurement, and performing the periodic positioning measurement is stopped. This enables the terminal to properly perform the GNSS measurement based on the configuration information, thus timely and effectively acquiring location information based on the GNSS measurement. Further, uplink synchronization compensation information may be acquired more accurately, avoiding interference between uplink transmissions from different terminals.

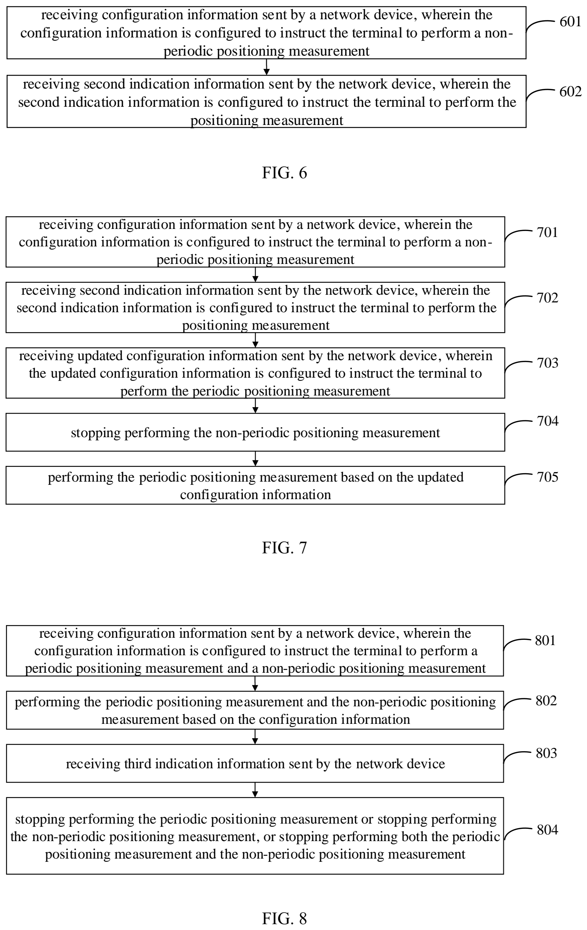

FIG. 6 is a flow chart illustrating a method for GNSS positioning measurement according to an embodiment of the disclosure. It should be noted that the method for GNSS positioning measurement in embodiments of the disclosure is performed by a terminal. The method may be performed independently or may be performed in conjunction with any other embodiments of the disclosure. As shown in FIG. 6, the method may include the following steps.

At step 601, configuration information sent by a network device is received, in which the configuration information is configured to instruct the terminal to perform a non-periodic positioning measurement.

In an embodiment of the disclosure, the terminal may receive the configuration information sent by the network device. The configuration information is configured to instruct the terminal to perform the non-periodic positioning measurement.

The terminal may perform the positioning measurement by receiving a trigger of second indication information sent by the network device.

At step 602, second indication information sent by the network device is received, in which the second indication information is configured to instruct the terminal to perform the positioning measurement.

In an embodiment of the disclosure, the terminal determines to perform the non-periodic positioning measurement based on the received configuration information. The terminal may receive the second indication information sent by the network device, in which the second indication information is configured to instruct the terminal to perform the positioning measurement.

In some implementations, the second indication information is further configured to indicate a time domain range in which the terminal performs the positioning measurement. The terminal may perform the positioning measurement within the time domain range indicated by the second indication information.

In an embodiment, the second indication information may indicate the time domain range using various manners. For example, the second indication information may directly indicate a start position and an end position of the time domain range, indicate a start position and a length of the time domain range, or indicate an end position and a length of the time domain range, which is not limited in embodiments of the disclosure.

In an embodiment, the second indication information may be carried in DCI. For example, information for determining the time domain range may be carried in a predefined or configurable information field in the DCI.

In some implementations, the configuration information is further configured to determine the time domain range in which the terminal performs the positioning measurement. The second indication information is only configured to trigger the terminal to perform the positioning measurement. For example, the second indication information may be 1-bit information, where "1" represents triggering the terminal to perform the positioning measurement, and "0" represents without triggering the terminal to perform the positioning measurement.

In an embodiment, the configuration information may indicate the time domain range using various manners. For example, the configuration information may directly indicate a start position and an end position of the time domain range, indicate a start position and a length of the time domain range, or indicate an end position and a length of the time domain range, which is not limited in embodiments of the disclosure.

In some implementations, the terminal may determine the time domain range for performing the positioning measurement through a protocol agreement or a predefined manner. For example, the protocol agreement may agree that the terminal performs the positioning measurement after n slots following receipt of the second indication information. The second indication information may only be configured to trigger the terminal to perform the positioning measurement.

In some implementations, after receiving the configuration information and performing the non-periodic positioning measurement, the terminal may further receive updated configuration information sent by the network device. The updated configuration information is configured to instruct the terminal to perform the periodic positioning measurement. After receiving the updated configuration information, the terminal may stop the non-periodic positioning measurement and perform the periodic positioning measurement based on the updated configuration information, or perform both the periodic positioning measurement and the non-periodic positioning measurements based on the updated configuration information.

In some implementations, before receiving the configuration information, the terminal may perform the periodic positioning measurement based on the protocol agreement. After receiving the configuration information, the terminal performs the non-periodic positioning measurement based on an indication of the configuration information.

In summary, the configuration information sent by the network device is received, in which the configuration information is configured to instruct the terminal to perform the non-periodic positioning measurement. The second indication information sent by the network device is received, in which the second indication information is configured to instruct the terminal to perform the positioning measurement. This enables the terminal to properly perform the GNSS measurement based on the configuration information, thus timely and effectively acquiring location information based on the GNSS measurement. Further, uplink synchronization compensation information may be acquired more accurately, avoiding interference between uplink transmissions from different terminals.

FIG. 7 is a flow chart illustrating a method for GNSS positioning measurement according to an embodiment of the disclosure. It should be noted that the method for GNSS positioning measurement in embodiments of the disclosure is performed by a terminal. The method may be performed independently or may be performed in conjunction with any other embodiments of the disclosure. As shown in FIG. 7, the method may include the following steps.

At step 701, configuration information sent by a network device is received, in which the configuration information is configured to instruct the terminal to perform a non-periodic positioning measurement.

At step 702, second indication information sent by the network device is received, in which the second indication information is configured to instruct the terminal to perform the positioning measurement.

In an embodiment of the disclosure, step 701 and step 702 may be realized in any manner of the embodiments of the disclosure, which are not limited in embodiments of the disclosure and will not be further detailed herein.

At step 703, updated configuration information sent by the network device is received, in which the updated configuration information is configured to instruct the terminal to perform the periodic positioning measurement.

In an embodiment of the disclosure, the terminal device may receive the updated configuration information sent by the network device. The updated configuration information is configured to instruct the terminal to perform the non-periodic positioning measurement.

That is, in an embodiment of the disclosure, the terminal device may receiving the updated configuration information sent by the network device to switch a mode (periodic or non-periodic) for performing the positioning measurement.

At step 704, performing the non-periodic positioning measurement is stopped.

In an embodiment of the disclosure, when performing the periodic positioning measurement, the terminal may receive the updated configuration information sent by the network device, which is configured to instruct performing the non-periodic positioning measurement, and may switch the mode for performing the positioning measurement, and stop performing the non-periodic positioning measurement, based on the updated configuration information.

At step 705, the periodic positioning measurement is performed based on the updated configuration information.

In an embodiment of the disclosure, the terminal may perform the periodic positioning measurement based on the received updated configuration information.

The method for performing the periodic positioning measurement based on the updated configuration information may be realized in any manner of the embodiments of the disclosure, which is not limited in embodiments of the disclosure and will not be further detailed herein.

In some embodiments, the terminal may support to perform both the periodic positioning measurement and the non-periodic positioning measurement based on the updated configuration information.

In summary, the configuration information sent by the network device is received, in which the configuration information is configured to instruct the terminal to perform the non-periodic positioning measurement. The second indication information sent by the network device is received, in which the second indication information is configured to instruct the terminal to perform the positioning measurement. The updated configuration information sent by the network device is received, in which the updated configuration information is configured to instruct the terminal to perform the periodic positioning measurement. Performing the non-periodic positioning measurement is stopped, and the periodic positioning measurement is performed based on the updated configuration information. This enables the terminal to properly perform the GNSS measurement based on the configuration information, thus timely and effectively acquiring location information based on the GNSS measurement. Further, uplink synchronization compensation information may be acquired more accurately, avoiding interference between uplink transmissions from different terminals.

FIG. 8 is a flow chart illustrating a method for GNSS positioning measurement according to an embodiment of the disclosure. It should be noted that the method for GNSS positioning measurement in embodiments of the disclosure is performed by a terminal. The method may be performed independently or may be performed in conjunction with any other embodiments of the disclosure. As shown in FIG. 8, the method may include the following steps.

At step 801, configuration information sent by a network device is received, in which the configuration information is configured to instruct the terminal to perform a periodic positioning measurement and a non-periodic positioning measurement.

In an embodiment of the disclosure, the terminal may receive the configuration information sent by the network device. The configuration information is configured to instruct the terminal to perform the periodic positioning measurement and the non-periodic positioning measurement.

The configuration information may include a periodic measurement configuration used by the terminal for performing the periodic positioning measurement. The measurement configuration may include periodic information of the terminal to perform the positioning measurement and first information. The first information is configured to determine a time domain range in which the terminal performs the positioning measurement. The terminal may perform the periodic positioning measurement based on the periodic measurement configuration, that is, perform the positioning measurement within the time domain range determined based on the first information, according to the periodic information included in the measurement configuration.

In an embodiment, the first information may indicate the time domain range using various manners. For example, the first information may directly indicate a start position and an end position of the time domain range, indicate a start position and a length of the time domain range, or indicate an end position and a length of the time domain range, which is not limited in embodiments of the disclosure.

In an embodiment, the configuration information may further include at least one periodic measurement configuration. The terminal may receive first indication information sent by the network device. The first indication information is configured to indicate, from the at least one measurement configuration, a measurement configuration used by the terminal for performing the positioning measurement.

In an embodiment, the first indication information may be carried in DCI. For example, the first indication information may be carried in a predefined or configurable information field in the DCI.

In an embodiment, in a case where the configuration information includes at least one periodic measurement configuration, when the terminal performs the positioning measurement using a first measurement configuration, the terminal may further receive a triggering indication sent by the network device. The triggering indication is configured to instruct the terminal to change periodic measurement configuration information. After receiving the triggering indication, the terminal may perform the positioning measurement based on a second measurement configuration indicated by the triggering indication. As an example, as shown in FIG. 4, the terminal performs the periodic positioning measurement based on the periodic measurement configuration 1. After receiving the triggering indication, the terminal performs the periodic positioning measurement based on the periodic measurement configuration 2 instructed by the triggering indication.

At step 802, the periodic positioning measurement and the non-periodic positioning measurement are performed based on the configuration information.

In an embodiment of the disclosure, the terminal may perform the periodic positioning measurement and the non-periodic positioning measurement based on the configuration information after receiving an indication of the configuration information. The terminal may perform the periodic positioning measurement based on the periodic measurement configuration included in the configuration information, and after receiving a trigger for the non-periodic positioning measurement sent by the network device, perform the non-periodic positioning measurement based on the trigger.

At step 803, third indication information sent by the network device is received.

In an embodiment of the disclosure, the terminal may receive the third indication information sent by the network device. The terminal may stop performing the periodic positioning measurement, or stop performing the non-periodic positioning measurement, or stop performing both the periodic positioning measurement and the non-periodic positioning measurement, based on the third indication information.

At step 804, performing the periodic positioning measurement or performing the non-periodic positioning measurement is stopped, or performing both the periodic positioning measurement and the non-periodic positioning measurement is stopped.

In an embodiment of the disclosure, after receiving the third indication information sent by the network device, the terminal may stop performing the periodic positioning measurement, or stop performing the non-periodic positioning measurement, or stop performing both the periodic positioning measurement and the non-periodic positioning measurement.

It should also be noted that the method for performing the periodic positioning measurement and the method for performing the non-periodic positioning measurement in the embodiments of the disclosure may be realized in any manner of the embodiments of the disclosure, which are not limited in embodiments of the disclosure and will not be further detailed herein.

In summary, the configuration information sent by the network device is received, in which the configuration information is configured to instruct the terminal to perform the periodic positioning measurement and the non-periodic positioning measurement. The periodic positioning measurement is performed based on the configuration information. The third indication information sent by the network device is received, in which the third indication information is configured to indicate the terminal to perform non-periodic positioning measurement, and performing the periodic positioning measurement is stopped. This enables the terminal to properly perform the GNSS measurement based on the configuration information, thus timely and effectively acquiring location information based on the GNSS measurement. Further, uplink synchronization compensation information may be acquired more accurately, avoiding interference between uplink transmissions from different terminals.

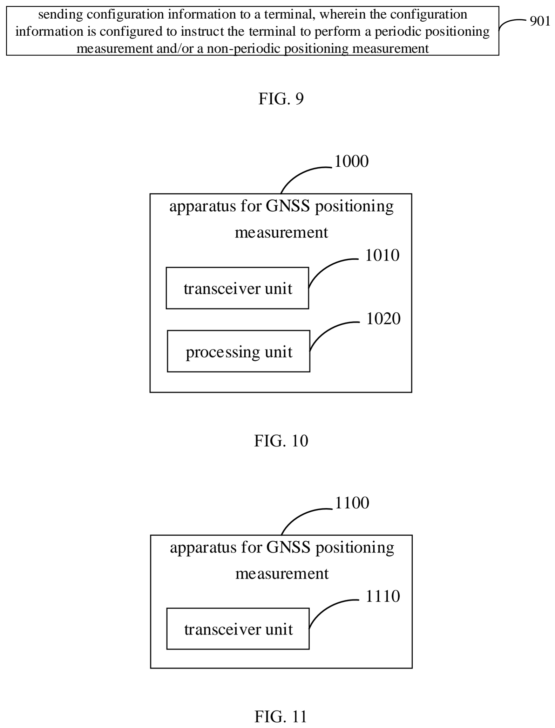

FIG. 9 is a flow chart illustrating a method for GNSS positioning measurement according to an embodiment of the disclosure. It should be noted that the method for GNSS positioning measurement in embodiments of the disclosure is performed by a network device. The method may be performed independently or may be performed in conjunction with any other embodiments of the disclosure. As shown in FIG. 9, the method may include the following step.

At step 901, configuration information is sent to a terminal, in which the configuration information is configured to instruct the terminal to perform a periodic positioning measurement and/or a non-periodic positioning measurement.

In an embodiment of the disclosure, the network device may send the configuration information to the terminal. The configuration information is configured to instruct the terminal to perform the periodic positioning measurement and/or the non-periodic positioning measurement.

In some implementations, the configuration information is configured to instruct the terminal to perform the periodic positioning measurement. The configuration information may include a periodic measurement configuration used by the terminal for performing the periodic positioning measurement. The measurement configuration may include periodic information of the terminal to perform the positioning measurement and first information. The first information is configured to determine a time domain range in which the terminal performs the positioning measurement. The terminal may perform the periodic positioning measurement based on the periodic measurement configuration, that is, perform the positioning measurement within the time domain range determined based on the first information according to the periodic information included in the measurement configuration.

In an embodiment, the first information may indicate the time domain range using various manner. For example, the first information may directly indicate a start position and an end position of the time domain range, indicate a start position and a length of the time domain range, or indicate an end position and a length of the time domain range, which is not limited in embodiments of the disclosure.

In an embodiment, the configuration information may further include at least one periodic measurement configuration. The terminal may receive first indication information sent by the network device. The first indication information is configured to indicate, from the at least one measurement configuration, a measurement configuration used by the terminal for performing the positioning measurement.

In an embodiment, when the configuration information includes at least one periodic measurement configuration and the terminal performs the positioning measurement using a first measurement configuration, the terminal may further receive a triggering indication sent by the network device. The triggering indication is configured to instruct the terminal to modify periodic measurement configuration information. After receiving the triggering indication, the terminal may perform the positioning measurement based on a second measurement configuration indicated by the triggering indication.

In an embodiment, after sending the configuration information to the terminal to instruct the terminal to perform the periodic positioning measurement, the network device may further send updated configuration information to the terminal. The updated configuration information is configured to instruct the terminal to perform the non-periodic positioning measurement. After receiving the updated configuration information, the terminal may stop performing the periodic positioning measurement and switch to performing the non-periodic positioning measurement, or the terminal may support performing both the periodic positioning measurement and the non-periodic positioning measurement based on the updated configuration information.

In some implementations, the configuration information is configured to instruct the terminal to perform the non-periodic positioning measurement. The network device may send second indication information to the terminal device. The second indication information is configured to instruct the terminal to perform the positioning measurement. That is, the terminal performs the positioning measurement triggered by the second indication information sent by the network device.

In an embodiment, the second indication information is further configured to indicate a time domain range in which the terminal performs the positioning measurement.

In an embodiment, the configuration information is further configured to determine the time domain range in which the terminal performs the positioning measurement.

In an embodiment, the second indication information or the configuration information may indicate the time domain range using various manners. For example, the second indication information or the configuration information may directly indicate a start position and an end position of the time domain range, indicate a start position and a length of the time domain range, or indicate an end position and a length of the time domain range, which is not limited in embodiments of the disclosure.

In an embodiment, after sending the configuration information to the terminal to instruct the terminal to perform the non-periodic positioning measurement, the network device may also send updated configuration information to the terminal. The updated configuration information is configured to instruct the terminal to perform the periodic positioning measurement. After receiving the updated configuration information, the terminal may stop performing the non-periodic positioning measurement and perform the periodic positioning measurement based on the updated configuration information, or the terminal may support performing both the periodic positioning measurement and the non-periodic positioning measurements based on the updated configuration information.

In some implementations, the configuration information is configured to instruct the terminal to perform the periodic positioning measurement and the non-periodic positioning measurement. The terminal may start to perform the periodic positioning measurement and the non-periodic positioning measurement based on the configuration information. After receiving third indication information sent by the network device, the terminal stops performing the periodic positioning measurement, stops performing the non-periodic positioning measurement, or stops performing both the periodic positioning measurement and the non-periodic positioning measurement.

In embodiments of the disclosure, the positioning measurement may be a GNSS measurement.

In summary, the configuration information is sent to the terminal, in which the configuration information is configured to instruct the terminal to perform the periodic positioning measurement and/or the non-periodic positioning measurement. This enables the terminal to properly perform the GNSS measurement based on the configuration information, thus timely and effectively acquiring location information based on the GNSS measurement. Further, uplink synchronization compensation information may be acquired more accurately, avoiding interference between uplink transmissions from different terminals.

Corresponding to the method for GNSS positioning measurement provided in the several embodiments described above, the disclosure also provides an apparatus for GNSS positioning measurement. Since the apparatus for GNSS positioning measurement provided in the embodiments of the disclosure corresponds to the method provided in the several embodiments described above, implementation of the method for GNSS positioning measurement is also applicable to the apparatus for GNSS positioning measurement provided in the following embodiments, which will not be described in detail in the following embodiments.

FIG. 10 is a block diagram illustrating an apparatus for GNSS positioning measurement provided in embodiments of the disclosure.

As shown in FIG. 10, the apparatus 1000 for GNSS positioning measurement includes a transceiver unit 1010 and a processing unit 1020.

The transceiver unit 1010 is configured to receive configuration information sent by a network device, in which the configuration information is configured to instruct the apparatus to perform a periodic positioning measurement and/or a non-periodic positioning measurement.

The processing unit 1020 is configured to perform a positioning measurement based on the configuration information.

In an embodiment, the configuration information is configured to instruct the terminal to perform the periodic positioning measurement, the configuration information includes a periodic measurement configuration, the measurement configuration includes periodic information of the terminal to perform the positioning measurement and first information, and the first information is configured to determine a time domain range in which the terminal performs the positioning measurement.

The processing unit 1020 is specifically configured to perform the positioning measurement within the time domain range based on the periodic information.

In an embodiment, the configuration information includes at least one measurement configuration, the transceiver unit 1010 is further configured to receive first indication information sent by the network device, in which the first indication information is configured to indicate, from the at least one measurement configuration, a measurement configuration used by the terminal for performing the positioning measurement.

In an embodiment, the transceiver unit 1010 is further configured to receive updated configuration information sent by the network device, in which the updated configuration information is configured to instruct the terminal to perform the non-periodic positioning measurement; and perform the non-periodic positioning measurement.

In an embodiment, the configuration information is configured to instruct the terminal to perform the non-periodic positioning measurement, the transceiver unit 1010 is further configured to receive second indication information sent by the network device, in which the second indication information is configured to instruct the terminal to perform the positioning measurement.

In an embodiment, the second indication information is further configured to indicate a time domain range in which the terminal performs the positioning measurement.

In an embodiment, the configuration information is further configured to determine a time domain range in which the terminal performs the positioning measurement.

In an embodiment, the transceiver unit 1010 is further configured to receive updated configuration information sent by the network device, in which the updated configuration information is configured to instruct the terminal to perform the periodic positioning measurement; and perform the periodic positioning measurement based on the updated configuration information.

In an embodiment, the configuration information is configured to instruct the terminal to perform the periodic positioning measurement and the non-periodic positioning measurement, the processing unit 1020 is specifically configured to perform the periodic positioning measurement based on the configuration information; receive third indication information sent by the network device, in which the third indication information is configured to instruct the terminal to perform the non-periodic positioning measurement; and perform the non-periodic positioning measurement.

The apparatus for GNSS positioning measurement is configured to receive the configuration information sent by the network device, in which the configuration information is configured to instruct the apparatus to perform the periodic positioning measurement and/or the non-periodic positioning measurement, and perform the positioning measurement based on the configuration information. This enables the terminal to properly perform the GNSS measurement based on the configuration information, thus timely and effectively acquiring location information based on the GNSS measurement. Further, uplink synchronization compensation information may be acquired more accurately, avoiding interference between uplink transmissions from different terminals.

FIG. 11 is a block diagram illustrating an apparatus for GNSS positioning measurement provided in embodiments of the disclosure.

As shown in FIG. 11, the apparatus 1000 for GNSS positioning measurement includes a transceiver unit 1110.

The transceiver unit 1010 is configured to send configuration information to a terminal, in which the configuration information is configured to instruct the terminal to perform a periodic positioning measurement and/or a non-periodic positioning measurement.

In an embodiment, the configuration information is configured to instruct the terminal to perform the periodic positioning measurement, the configuration information includes a periodic measurement configuration, the measurement configuration includes periodic information of the terminal to perform the positioning measurement and first information, and the first information is configured to determine a time domain range in which the terminal performs the positioning measurement; the configuration information is configured to instruct the terminal to perform the positioning measurement within the time domain range based on the periodic information.

In an embodiment, the configuration information includes at least one measurement configuration, the transceiver unit 1010 is further configured to send first indication information to the terminal, in which the first indication information indicates, from the at least one measurement configuration, a measurement configuration used by the terminal for performing the positioning measurement.

In an embodiment, the transceiver unit 1010 is further configured to send updated configuration information to the terminal, in which the updated configuration information is configured to instruct the terminal to perform the non-periodic positioning measurement.

In an embodiment, the configuration information is configured to instruct the terminal to perform the non-periodic positioning measurement, the transceiver unit 1010 is further configured to send second indication information to the terminal, in which the second indication information is configured to instruct the terminal to perform the positioning measurement.

In an embodiment, the second indication information further indicates a time domain range in which the terminal performs the positioning measurement.

In an embodiment, the configuration information is further configured to determine a time domain range in which the terminal performs the positioning measurement.

In an embodiment, the transceiver unit 1010 is further configured to send updated configuration information to the terminal, in which the updated configuration information is configured to instruct the terminal to perform the periodic positioning measurement.

In an embodiment, the configuration information is configured to instruct the terminal to perform the periodic positioning measurement and the non-periodic positioning measurement, the transceiver unit 1010 is further configured to send third indication information to the terminal, in which the third indication information is configured to instruct the terminal to perform the non-periodic positioning measurement.

The apparatus for GNSS positioning measurement is configured to send the configuration information to the terminal, in which the configuration information is configured to instruct the terminal to perform the periodic positioning measurement and/or the non-periodic positioning measurement. This enables the terminal to properly perform the GNSS measurement based on the configuration information, thus timely and effectively acquiring location information based on the GNSS measurement. Further, uplink synchronization compensation information may be acquired more accurately, avoiding interference between uplink transmissions from different terminals.

To implement the above embodiments, embodiments of the disclosure further provide a communication device. The communication device includes a processor and a memory, in which the memory stores a computer program, which, when executed by the processor, causes the device to implement the method illustrated in FIG. 2 to FIG. 8.

To implement the above embodiments, embodiments of the disclosure further provide a communication device. The communication device includes a processor and a memory, in which the memory stores a computer program, which, when executed by the processor, causes the device to implement the method illustrated in FIG. 9.

To implement the above embodiments, embodiments of the disclosure further provide a communication device. The communication device includes a processor and an interface circuit; in which the interface circuit is configured to receive code instructions and transmit the code instructions to the processor; and the processor is configured to execute the code instructions to implement the method illustrated in FIG. 2 to FIG. 8.

To implement the above embodiments, embodiments of the disclosure further provide a communication device. The communication device includes a processor and an interface circuit; in which the interface circuit is configured to receive code instructions and transmit the code instructions to the processor; and the processor is configured to execute the code instructions to implement the method illustrated in FIG. 9.

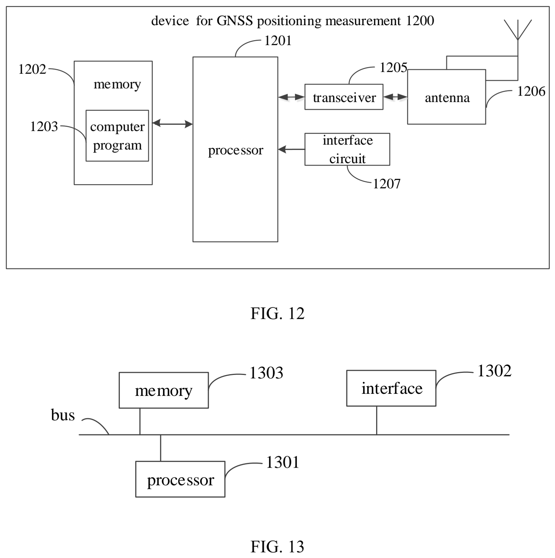

FIG. 12 is a block diagram illustrating another device for GNSS positioning measurement provided in embodiments of the disclosure. The device 1200 may be a network device, a terminal, a chip, a system on chip or a processor that supports the network device to implement the method or a system on chip or a processor that supports the terminal to implement the method. The device may be used to realize the methods described in the above method embodiments with reference to the descriptions of the above-described method embodiments.

The device 1200 may include one or more processors 1201. The processor 1201 may be a general purpose processor or a dedicated processor. For example, the processor 1201 may be a baseband processor or a central processor. The baseband processor may be configured to process a communication protocol and communication data, and the central processor may be configured to control the device 1200 (e.g., a base station, a baseband chip, a terminal, a terminal chip, a DU or CU, etc.), to execute a computer program, and process data of the computer program.

In an embodiment, the device 1200 may further include one or more memories 1202 with a computer program 1203 stored thereon. The memory 1202 executes the computer program 1203 so that the device 1200 performs the method as described in the above method embodiments. The computer program 1203 may be solidified in the processor 1201, in which case the processor 1201 may be implemented by hardware.

In an embodiment, the memory 1202 may further store data. The device 1200 and the memory 1202 may be independently configured or integrated together.

In an embodiment, the device 1200 may further include a transceiver 1205 and an antenna 1206. The transceiver 1205 may be referred to as a transceiver unit, a transceiver machine or a transceiver circuit, which may be configured to achieve a transceiving function. The transceiver 1205 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

In an embodiment, the device 1200 may further include one or more interface circuits 1207. The interface circuit 1207 is configured to receive code instructions and transmit the code instructions to the processor 1201. The processor 1201 runs the code instructions so that the device 1200 performs the method according to the above method embodiment.

In an implementation, the processor 1201 may include a transceiver configured to implement receiving and transmitting functions. For example, the transceiver may be a transceiver circuit, or an interface, or an interface circuit. The transceiver circuit, the interface or the interface circuit configured to implement receiving and transmitting functions may be separate or integrated together. The transceiver circuit, the interface or the interface circuit may be configured to read and write codes/data, or the transceiver circuit, the interface or the interface circuit may be configured to transmit or deliver a signal.

In an implementation, the device 1200 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The device for GNSS positioning measurement described in the above embodiments may be a network device or a terminal, but the scope of the device described in the disclosure is not limited thereto, and a structure of the device may not be subject to FIG. 10 to FIG. 11. The device for GNSS positioning measurement may be a stand-alone device or may be a part of a larger device. For example, the device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

In the case that the device for GNSS positioning measurement may be a chip or a system on chip, please refer to FIG. 13. FIG. 13 is a block diagram illustrating a chip according to an embodiment of the disclosure. The chip illustrated in FIG. 13 includes a processor 1301 and an interface 1302, in which the number of processors 1301 may be one or more and the number of interfaces 1302 may be more than one.

For the case where the chip is used to implement the functionality of a terminal in embodiments of the disclosure: the interface 1302 is configured for receiving code instructions and sending the code instructions to the processor; the processor 1301 is configured for running the code instructions to perform the method in FIG. 2 to FIG. 8.

For the case where the chip is used to implement the functionality of a network device in embodiments of the disclosure: the interface 1302 is configured for receiving code instructions and sending the code instructions to said processor; the processor 1301 is configured for running the code instructions to perform the method in FIG. 9.

In an embodiment, the chip further includes a memory 1303, configured to save necessary computer program and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

Embodiments of the disclosure also provide a communication system. The system includes a device for GNSS positioning measurement serving as a terminal device and a device for GNSS positioning measurement serving as a network device in embodiments of FIG. 10 to FIG. 11. Alternatively, the system includes the device for GNSS positioning measurement serving as a terminal device and the device for GNSS positioning measurement serving as a network device in embodiments of FIG. 12.

A readable storage medium with instructions stored thereon is further provided in the disclosure. When the instructions are executed by a computer, the steps in any method embodiment are implemented.

A computer program product is further provided in the disclosure. The computer program product implements the functions of any method embodiment when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with the examples described in the embodiments of the disclosure, units and algorithm steps may be implemented by electronic hardware or a combination of electronic hardware and computer software. Whether the functions are executed by hardware or software depends on a specific application and a design constraint of the technical solution. Those skilled in the art may use different methods for each specific application to implement the described functions, but such implementation should not be considered beyond the scope of the disclosure.

Those skilled in the art may clearly understand that for a specific working process of a system, an apparatus and a unit described above reference may be made to a corresponding process in the above method embodiments, and details will not be repeated here.

It should be understood that the various forms of processes shown above can be used to reorder, add or delete steps. For example, the steps described in embodiments of the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for global navigation satellite system (GNSS) positioning measurement, performed by a terminal, comprising:
receiving configuration information sent by a network device, wherein the configuration information is configured to instruct the terminal to perform a periodic positioning measurement and/or a non-periodic positioning measurement; and
performing a positioning measurement based on the configuration information.

2. The method according to claim 1, wherein the configuration information is configured to instruct the terminal to perform the periodic positioning measurement, the configuration information comprises a periodic measurement configuration, the measurement configuration comprises periodic information of the terminal to perform the positioning measurement and first information, and the first information is configured to determine a time domain range in which the terminal performs the positioning measurement;
performing the positioning measurement based on the configuration information comprises:
performing the positioning measurement within the time domain range based on the periodic information.

3. The method according to claim 2, wherein the configuration information comprises at least one measurement configuration, and the method further comprises:
receiving first indication information sent by the network device, wherein the first indication information is configured to indicate, from the at least one measurement configuration, a measurement configuration used by the terminal for performing the positioning measurement.

4. The method according to claim 2 or 3, further comprising:
receiving updated configuration information sent by the network device, wherein the updated configuration information is configured to instruct the terminal to perform the non-periodic positioning measurement; and
performing the non-periodic positioning measurement.

5. The method according to claim 1, wherein the configuration information is configured to instruct the terminal to perform the non-periodic positioning measurement, and the method further comprises:
receiving second indication information sent by the network device, wherein the second indication information is configured to instruct the terminal to perform the positioning measurement.

6. The method according to claim 5, wherein the second indication information is further configured to indicate a time domain range in which the terminal performs the positioning measurement.

7. The method according to claim 5, wherein the configuration information is further configured to determine a time domain range in which the terminal performs the positioning measurement.

8. The method according to any one of claims 5 to 7, further comprising:
receiving updated configuration information sent by the network device, wherein the updated configuration information is configured to instruct the terminal to perform the periodic positioning measurement; and
performing the periodic positioning measurement based on the updated configuration information.

9. The method according to claim 1, wherein the configuration information is configured to instruct the terminal to perform the periodic positioning measurement and the non-periodic positioning measurement, and the method further comprises:
performing the periodic positioning measurement based on the configuration information;
receiving third indication information sent by the network device, wherein the third indication information is configured to instruct the terminal to perform the non-periodic positioning measurement; and
performing the non-periodic positioning measurement.

10. A method for global navigation satellite system (GNSS) positioning measurement, performed by a network device, comprising:
sending configuration information to a terminal, wherein the configuration information is configured to instruct the terminal to perform a periodic positioning measurement and/or a non-periodic positioning measurement.

11. The method according to claim 10, wherein the configuration information is configured to instruct the terminal to perform the periodic positioning measurement, the configuration information comprises a periodic measurement configuration, the measurement configuration comprises periodic information of the terminal to perform the positioning measurement and first information, and the first information is configured to determine a time domain range in which the terminal performs the positioning measurement;
the configuration information is configured to instruct the terminal to perform the positioning measurement within the time domain range based on the periodic information.

12. The method according to claim 11, wherein the configuration information comprises at least one measurement configuration, and the method further comprises:
sending first indication information to the terminal, wherein the first indication information indicates, from the at least one measurement configuration, a measurement configuration used by the terminal for performing the positioning measurement.

13. The method according to claim 11 or 12, further comprising:
sending updated configuration information to the terminal, wherein the updated configuration information is configured to instruct the terminal to perform the non-periodic positioning measurement.

14. The method according to claim 10, wherein the configuration information is configured to instruct the terminal to perform the non-periodic positioning measurement, and the method further comprises:
sending second indication information to the terminal, wherein the second indication information is configured to instruct the terminal to perform the positioning measurement.

15. The method according to claim 14, wherein the second indication information further indicates a time domain range in which the terminal performs the positioning measurement.

16. The method according to claim 14, wherein the configuration information is further configured to determine a time domain range in which the terminal performs the positioning measurement.

17. The method according to any one of claims 14 to 16, further comprising:
sending updated configuration information to the terminal, wherein the updated configuration information is configured to instruct the terminal to perform the periodic positioning measurement.

18. The method according to claim 10, wherein the configuration information is configured to instruct the terminal to perform the periodic positioning measurement and the non-periodic positioning measurement, and the method further comprises:
sending third indication information to the terminal, wherein the third indication information is configured to instruct the terminal to perform the non-periodic positioning measurement.

19. An apparatus for global navigation satellite system (GNSS) positioning measurement, comprising:
a transceiver unit, configured to receive configuration information sent by a network device, wherein the configuration information is configured to instruct the apparatus to perform a periodic positioning measurement and/or a non-periodic positioning measurement; and
a processing unit, configured to perform a positioning measurement based on the configuration information.

20. An apparatus for global navigation satellite system (GNSS) positioning measurement, comprising:
a transceiver unit, configured to send configuration information to a terminal, wherein the configuration information is configured to instruct the terminal to perform a periodic positioning measurement and/or a non-periodic positioning measurement.

21. A communication device, comprising a processor and a memory, wherein the memory stores a computer program, which, when executed by the processor, cause the device to implement the method according to any one of claims 1 to 9.

22. A communication device, comprising a processor and a memory, wherein the memory stores a computer program, which, when executed by the processor, cause the device to implement the method according to any one of claims 10 to 18.

23. A communication device, comprising: a processor and an interface circuit; wherein
the interface circuit is configured to receive code instructions and transmit the code instructions to the processor; and
the processor is configured to execute the code instructions to implement the method according to any one of claims 1 to 9.

24. A communication device, comprising: a processor and an interface circuit; wherein
the interface circuit is configured to receive code instructions and transmit the code instructions to the processor; and
the processor is configured to execute the code instructions to implement the method according to any one of claims 10 to 18.

25. A computer-readable storage medium, configured to store instructions, wherein when the instructions are executed, the method according to any one of claims 1 to 9 is implemented.

26. A computer-readable storage medium, configured to store instructions, wherein when the instructions are executed, the method according to any one of claims 10 to 18 is implemented.

27. A communication system, comprising:
a terminal, configured to perform a method according to any one of claims 1 to 9; and
a network device, configured to perform a method according to any one of claims 10 to 18.
